(19) Europäisches Patentamt / European Patent Office / Office européen des brevets

(11) **EP 3 226 563 B1**

(12) **EUROPEAN PATENT SPECIFICATION**

(45) Date of publication and mention
of the grant of the patent:
**23.06.2021 Bulletin 2021/25**

(51) Int Cl.:
***H04N 19/85*** (2014.01)

(21) Application number: **17163192.2**

(22) Date of filing: **28.03.2017**

(54) **CHROMA RESHAPING**

CHROMA-UMFORMUNG

REMODELAGE DE CHROMINANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2016 EP 16162919**

(43) Date of publication of application:
**04.10.2017 Bulletin 2017/40**

(73) Proprietor: **Dolby Laboratories Licensing Corp.
San Francisco, CA 94103 (US)**

(72) Inventor: **SU, Guan-Ming
Sunnyvale, CA California 94085 (US)**

(74) Representative: **Dolby International AB
Patent Group Europe
Apollo Building, 3E
Herikerbergweg 1-35
1101 CN Amsterdam Zuidoost (NL)**

(56) References cited:
**WO-A1-2014/204865     US-A1- 2009 196 338
US-A1- 2012 314 944**

• **MINOO (ARRIS) K ET AL: "Description of the
reshaper parameters derivation process in ETM
reference software", 23. JCT-VC MEETING;
19-2-2016 - 26-2-2016; SAN DIEGO; (JOINT
COLLABORATIVE TEAM ON VIDEO CODING OF
ISO/IEC JTC1/SC29/WG11 AND ITU-T SG.16 );
URL:
HTTP://WFTP3.ITU.INT/AV-ARCH/JCTVC-SITE/,,
no. JCTVC-W0031, 11 January 2016 (2016-01-11),
XP030117798,**

**Description**

**TECHNOLOGY**

The present disclosure relates generally to images. More particularly, an aspect of the present disclosure relates to a method to reshape a high-dynamic range video signal. Other aspects of the present disclosure relate to a method of decoding reshaped high-dynamic range video signals; and an apparatus configured to implement such methods and a computer-readable storage medium comprising instructions which, when executed by a processor, cause a processor to carry out such methods.

**BACKGROUND**

The European search report cites the following documents:

- WO 2014/204865 A1 (hereinafter "D1");
- MINOO (ARRIS) K ET AL: "Description of the reshaper parameters derivation process in ETM reference software", 23. JCT-VC MEETING, no. JCTVC-WO0031 (hereinafter "D2");
- US 2012/314944 A1 (hereinafter "D3"); and
- US 2009/196338 A1 (hereinafter "D4").

D1 describes an encoder that receives an input enhanced dynamic range (EDR) image to be coded in a layered representation. Input images may be gamma-coded or perceptually-coded using a bit-depth format not supported by one or more video encoders. The input image is remapped to one or more quantized layers to generate output code words suitable for compression using the available video encoders. Given a mapping function, the reverse mapping function may be transmitted to a decoder as a look-up table or it may be approximated using a piecewise polynomial approximation.

D2 describes reshaping process algorithms implemented in the reference Exploratory Test Model (ETM) software for HDR extension of HEVC. The system uses HEVC Main 10 profile for the bitstream generation and bitstream decoding, and uses metadata provided by the decoder to control decoder side processing used to reconstruct HDR and WCG representation.

D3 describes coding of HDR images. An initial HDR image is received. Processing the received HDR image creates a JPEG-2000 DCI-compliant coded baseline image and an HDR-enhancement image. The coded baseline image has one or more color components, each of which provide enhancement information that allows reconstruction of an instance of the initial HDR image using the baseline image and the HDR-enhancement images.

D4 describes an architecture for enhancing the compression of a video signal and improving the perceptual quality of the video compression schemes. The architecture operates to reshape the normal multimodal energy distribution of the input video signal to a new energy distribution. In the context of luma, the algorithm maps the black and white (or contrast) information of a picture to a new energy distribution.

**BRIEF DESCRIPTION OF THE DRAWINGS**

An embodiment of the instant disclosure is illustrated by way of example, and not in way by limitation, in the figures of the accompanying drawings and in which like reference numerals refer to similar elements and in which:

FIG. 1 depicts a first example hardware embodiment;
FIG. 2 depicts an example process for a video delivery pipeline;
FIG. 3 depicts a first example process for chroma reshaping in accordance with an embodiment of the disclosure;
FIG. 4 depicts a second example process for chroma reshaping using an Enhanced Dynamic Range (EDR) source and a reference signal in accordance with an embodiment of the disclosure;
FIG. 5 depicts a third example process for chroma reshaping using an Enhanced Dynamic Range (EDR) source and a reference signal and solving forward and backward reshaping in accordance with an embodiment of the disclosure;
FIG. 6 depicts a first example method of chroma reshaping having a codec friendly input signal in accordance with an embodiment of the disclosure;
FIG. 7 depicts a second example method of chroma reshaping having a codec friendly input signal in accordance with an embodiment of the disclosure;
FIG. 8 depicts a third example method of chroma reshaping having a codec unfriendly input signal in accordance with an embodiment of the disclosure;

FIG. 9 depicts a fourth example method of chroma reshaping having a codec friendly input signal in accordance with an embodiment of the disclosure;

FIG. 10 depicts a fifth example method of chroma reshaping having a codec unfriendly input signal in accordance with an embodiment of the disclosure;

FIG. 11 depicts a sixth example method of chroma reshaping having a codec friendly input signal in accordance with an embodiment of the disclosure;

FIG. 12 depicts a seventh example method of chroma reshaping having a coded unfriendly input signal in accordance with an embodiment of the disclosure;

FIG. 13 depicts a reshaping encoder in accordance with an embodiment of the disclosure;

FIG. 14 depicts a reshaping decoder in accordance with an embodiment of the disclosure; and

FIG. 15 depicts an eighth example method of chroma reshaping having an indeterminate signal in accordance with an embodiment of the disclosure.

## DESCRIPTION OF EXAMPLE EMBODIMENTS

As used herein, the term 'dynamic range' (DR) may relate to a capability of the human visual system (HVS) to perceive a range of intensity (e.g., luminance, luma) in an image, e.g., from darkest darks (blacks) to brightest whites (i.e., highlights). In this sense, DR relates to a 'scene-referred' intensity. DR may also relate to the ability of a display device to adequately or approximately render an intensity range of a particular breadth. In this sense, DR relates to a 'display-referred' intensity. Unless a particular sense is explicitly specified to have particular significance at any point in the description herein, it should be inferred that the term may be used in either sense, e.g. interchangeably.

As used herein, the term high dynamic range (HDR) relates to a DR breadth that spans the some 14-15 orders of magnitude of the human visual system (HVS). In practice, the DR over which a human may simultaneously perceive an extensive breadth in intensity range may be somewhat truncated, in relation to HDR. As used herein, the terms enhanced dynamic range (EDR) or visual dynamic range (VDR) may individually or interchangeably relate to the DR that is perceivable within a scene or image by a human visual system (HVS) that includes eye movements, allowing for some light adaptation changes across the scene or image. As used herein, EDR may relate to a DR that spans 5 to 6 orders of magnitude. Thus while perhaps somewhat narrower in relation to true scene referred HDR, EDR nonetheless represents a wide DR breadth and may also be referred to as HDR.

In practice, images comprise one or more color components YCbCr (e.g., luma Y and chroma Cb and Cr) wherein color components are represented by a precision of $n$-bits per pixel (e.g., $n$=8). Using linear luminance coding, images where n $\leq$ 8 (e.g., color 24-bit Joint Photographies Experts Group (JPEG) images) are considered images of standard dynamic range, while images where $n$ > 8 may be considered images of enhanced dynamic range. EDR and HDR images may also be stored and distributed using high-precision (e.g., 16-bit) floating-point formats.

As used herein, the term "color format" denotes the color space (e.g., YCbCr, RGB, ICtCp, and the like), color sampling (e.g., 4:2:0), EOTF (e.g., gamma, PQ, HLG, etc.), and other parameters defining the luma and chroma characteristics of the video signal. The color space variable may be in a format (for example Red Green Blue (RGB), Luma Y, Blue minus Luma U and Red minus Luma V (YUV), YCbCr, and the like) and a chroma subsampling variable (for example 4:4:4, 4:2:0, and the like). Additionally, the concepts in the instant application apply also to electro optical transfer functions (EOTFs) such as gamma or Perceptual Quantization (PQ). An EOTF describes how digital words are translated into light to be viewed.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section. Similarly, issues identified with respect to one or more approaches should not assume to have been recognized in any prior art on the basis of this section, unless otherwise indicated.

Signal reshaping and coding of high dynamic range (HDR) images is described herein. In the following description, for the purposes of explanation, numerous specific details are set forth in order to provide a thorough understanding of the instant disclosure. It will be apparent, however, that the instant disclosure may be practiced without these specific details. In other instances, well-known structures and devices are not described in exhaustive detail, in order to avoid unnecessarily occluding, obscuring, or obfuscating the instant disclosure. The present invention is set out in the appended claims.

## OVERVIEW

Example embodiments described herein relate to the reshaping and coding of high-dynamic range images, e.g. HDR video. Three overall scenarios are envisioned, one in which the input video signal is a codec friendly video signal that is converted to a codec unfriendly video signal, the codec unfriendly video signal then being reshaped to obtain a third video signal so that a statistical characteristic of the third video signal is similar to a corresponding statistical characteristic of the input video signal. A second scenario may have an input video signal which is codec unfriendly, that is converted to a codec friendly video signal, the input video signal then being reshaped to obtain a third video signal having a statistical characteristic similar to the codec friendly video signal. In a third scenario, an input video signal is converted to a codec friendly video signal and is also converted to a codec unfriendly video signal, wherein the codec unfriendly signal is reshaped to obtain a third video signal that has a statistical characteristic similar to the coded friendly signal.

A method to reshape a high-dynamic range video signal is defined in claim 1. A color format may comprise a color space and/or a color sampling and/or an EOTF. The first color format is different from the second color format.

In an embodiment, the first signal corresponds to a codec friendly signal, whereas the second signal corresponds to a codec unfriendly signal.

**Example Hardware**

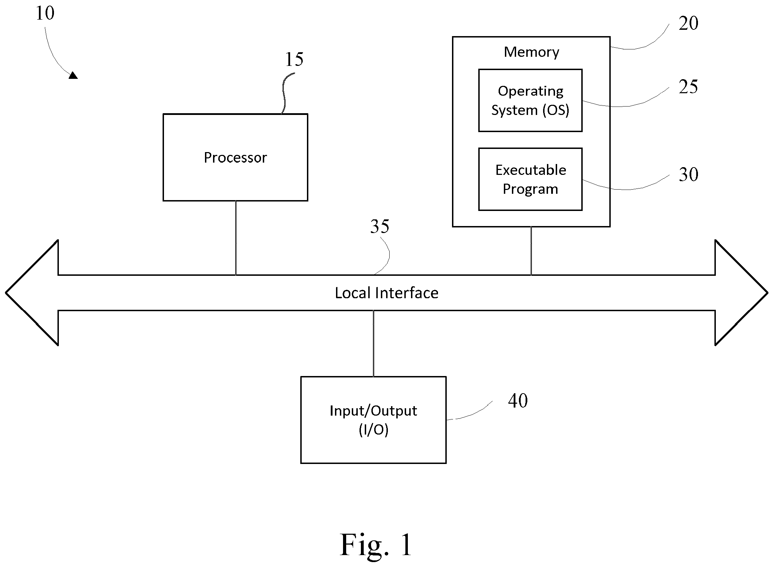

FIG. 1 depicts a first exemplary embodiment of a target hardware for implementation of an embodiment of the present disclosure.

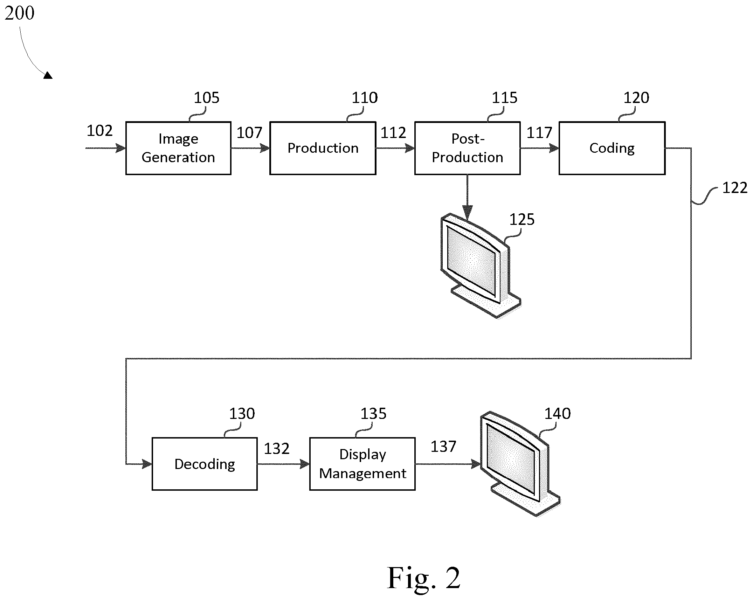

FIG. 1 is an exemplary embodiment of a target hardware (10) (e.g., a computer system) for implementing the embodiments of Figs. 2-15. This target hardware comprises a processor (15), a memory bank (20), a local interface bus (35) and one or more Input/Output devices (40). The processor may execute one or more instructions related to the implementation of Figs. 2-15, and as provided by the Operating System (25) based on some executable program (30) stored in the memory (20). These instructions are carried to the processor (15) via the local interface (35) and as dictated by some data interface protocol specific to the local interface and the processor (15). It should be noted that the local interface (35) is a symbolic representation of several elements such as controllers, buffers (caches), drivers, repeaters and receivers that are generally directed at providing address, control, and/or data connections between multiple elements of a processor based system. In some embodiments the processor (15) may be fitted with some local memory (cache) where it can store some of the instructions to be performed for some added execution speed. Execution of the instructions by the processor may require usage of some input/output device (40), such as inputting data from a file stored on a hard disk, inputting commands from a keyboard, inputting data and/or commands from a touchscreen, outputting data to a display, or outputting data to a Universal Serial Bus (USB) flash drive. In some embodiments, the operating system (25) facilitates these tasks by being the central element to gathering the various data and instructions required for the execution of the program and provide these to the microprocessor. In some embodiments the operating system may not exist, and tasks are under direct control of the processor (15), although the basic architecture of the target hardware device (10) will remain the same as depicted in FIG. 1. In some embodiments a plurality of processors may be used in a parallel configuration for added execution speed. In such a case, the executable program may be specifically tailored to a parallel execution. Also, in some embodiments the processor (15) may execute part of the implementation of Figs. 2-15, and some other part may be implemented using dedicated hardware/firmware placed at an Input/Output location accessible by the target hardware (10) via local interface (35). The target hardware (10) may include a plurality of executable programs (30), which may run independently or in combination with one another.

The methods and systems described in the present disclosure may be implemented in hardware, software, firmware or any combination thereof. Features described as blocks, modules or components may be implemented together (e.g., in a logic device such as an integrated logic device) or separately (e.g., as separate connected logic devices). The software portion of the methods of the present disclosure may comprise a computer-readable medium which comprises instructions that, when executed, perform, at least in part, the described methods. The computer-readable medium may comprise, for example, a random access memory (RAM) and/or a read-only memory (ROM). The instructions may be executed by a processor (e.g., a digital signal processor (DSP), an application specific integrated circuit (ASIC), a field programmable logic array (FPGA), a graphic processing unit (GPU) or a general purpose GPU).

**EXAMPLE VIDEO DELIVERY PROCESSING PIPELINE**

FIG. 2 depicts an example process of a conventional video delivery pipeline (200) showing various stages from video capture to video content display. A sequence of video frames (102) is captured or generated using image generation block (105). Video frames (102) may be digitally captured (e.g. by a digital camera) or generated by a computer (e.g. using computer animation) to provide video data (107). Alternatively, video frames (102) may be captured on film by a film camera. The film is converted to a digital format to provide video data (107). In a production phase (110), video data (107) is edited to provide a video production stream (112).

The video data of production stream (112) is then provided to a processor at block (115) for post-production editing. Post-production editing (115) may include adjusting or modifying colors or brightness in particular areas of an image to enhance the image quality or achieve a particular appearance for the image in accordance with the video creator's creative intent. This is sometimes called "color timing" or "color grading." Other editing (e.g. scene selection and sequencing, image cropping, addition of computer-generated visual special effects, etc.) may be performed at block (115) to yield a final version (117) of the production for distribution. During post-production editing (115), video images are viewed on a reference display (125).

Following post-production (115), video data of final production (117) may be delivered to encoding block (120) for delivering downstream to decoding and playback devices such as television sets, set-top boxes, movie theaters, and the like. In some embodiments, coding block (120) may include audio and video encoders, such as those defined by Advanced Television Systems Committee (ATSC), Digital Video Broadcasting (DVB), Digital Video Disk (DVD), Blu-Ray, and other delivery formats, to generate coded bit stream (122). In a receiver, the coded bit stream (122) is decoded by decoding unit (130) to generate a decoded signal (132) representing an identical or close approximation of signal (117). The receiver may be attached to a target display (140) which may have different characteristics than the reference display (125). In that case, a display management block (135) may be used to map the dynamic range of decoded signal (132) to the characteristics of the target display (140) by generating display-mapped signal (137).

**THE IPT-PQ COLOR SPACE**

In an embodiment, without limitation, part of the processing pipeline, for example, coding (120), decoding (130), and display management (135) may be performed in what will be referred to as the IPT-PQ color space. An example use of the IPT-PQ color space for display management application may be found in "Display Management for High Dynamic Range Video," World Intellectual Property Organization (WIPO) Publication WO 2014/130343, by R. Atkins et al. The IPT color space, as described in *"Development and testing of a color space (ipt) with improved hue uniformity"*, by F. Ebner and M.D. Fairchild, in Proc. 6th Color Imaging Conference: Color Science, Systems, and Applications, IS&T, Scottsdale, Arizona, Nov. 1998, pp. 8-13 (to be referred to as the Ebner paper), is a model of the color difference between cones in the human visual system. In this sense it is like the YCbCr or the CIE-Lab color spaces; however, it has been shown in some scientific studies to better mimic human visual processing than these spaces. Like CIE-Lab, IPT is a normalized space to some reference luminance. In an embodiment, the normalization is based on the maximum luminance of a target display (e.g., 5,000 nits).

The term "PQ" as used herein refers to perceptual quantization. The human visual system responds to increasing light levels in a very non-linear way. A human's ability to see a stimulus is affected by the luminance of that stimulus, the size of the stimulus, the spatial frequency(ies) making up the stimulus, and the luminance level that the eyes have adapted to at the particular moment one is viewing the stimulus. In an embodiment, a perceptual quantizer function maps linear input gray levels to output gray levels that better match the contrast sensitivity thresholds in the human visual system. Examples of PQ mapping functions are described in U.S. Patent Ser. No. 9,077,994 (to be referred as the '994 Patent)," by J. S. Miller et al., parts of which have been adopted by the Society of Motion Picture and Television Engineers (SMPTE) ST 2084:2014 specification, titled "High Dynamic Range Electro-optical Transfer Function of Mastering Reference Displays," Aug. 16, 2014, where given a fixed stimulus size, for every luminance level (i.e., the stimulus level), a minimum visible contrast step at that luminance level is selected according to the most sensitive adaptation level and the most sensitive spatial frequency (according to HVS models). Compared to the traditional gamma curve, which represents the response curve of a physical cathode ray tube (CRT) device and coincidently may have a very rough similarity to the way the human visual system responds, a PQ curve, as determined by the '994 Patent, imitates the true visual response of the human visual system using a relatively simple functional model. While most discussions within the disclosure pertain to IPT-PQ, the methods and devices may be applicable to other color spaces suitable for High Dynamic Range (HDR) imaging including ICtCp, Hybrid-Log Gamma (HLG) and the like.

**IPT-PQ** VERSUS YCBCR-GAMMA

Most of the existing video compression standards, such as Motion Pictures Experts Group (MPEG), MPEG-1, MPEG-2, Advanced Video Coding (AVC), High Efficiency Video Coding (HEVC), and the like, have been tested, evaluated, and optimized for gamma-coded images in the YCbCr color space; however, experimental results have shown that the IPT-PQ color space may provide a better representation format for high-dynamic range images with 10 or more bits per pixel per color component. Signal encoding in color spaces that are better suited for HDR and wide color gamut signals (e.g., IPT-PQ) may yield better overall picture quality. For purposes of this disclosure YCbCr color space encoding is considered more compression friendly than the IPT-PQ color space encoding, which may be considered compression unfriendly.

**The $IC_TC_P$ Color Space**

$IC_TC_P$, also to be referred to as ICtCp (or ITP), is a proposed new color space especially designed for processing high dynamic range and Wide Color Gamut (WCG) signals. As with IPT-PQ, $I$ (Intensity) denotes the brightness of the PQ-encoded signal, $C_T$, Tritan Axis, corresponds to blue-yellow perception, and $C_P$, Protan Axis, corresponds to red-green color perception. In addition to the discussed features of IPT-PQ, in $IC_TC_P$:

- • The chroma is rotated to align skin tones more closely to YCbCr;
- • The XYZ to Long Medium Short (LMS) matrix is optimized for better uniformity and linearity for WCG images; and
- • The L'M'S' to ICtCp matrix is optimized to improve isoluminance and stability with respect to HDR and WCG images.

Hybrid-log gamma (HLG) is also an alternative representation of high-dynamic range images. A detailed description of the $IC_TC_P$ color space and HLG may be found in International Telecommunications Union Radio communication Sector (ITU-R) Report BT. 2390-0 (2016), "High dynamic range television for production and international programme exchange,".

As used herein, the term "isoluminance" refers to a measure of how well luminance (say, $I$ of ICtCp or $Y'$ of Y'Cb'Cr') correspond to luminance $Y$. Indirectly, it measures how well a color space separates luma from chroma.

From an implementation point of view, using the $IC_TC_P$ color space requires the same hardware and signal flow as using the traditional gamma-coded YCbCr. For example, consider using gamma-corrected YCbCr (Y'Cb'Cr') in a camera pipeline.

## COMPRESSION FRIENDLY VERSUS COMPRESSION UNFRIENDLY

Video signals in IPTPQ, $IC_TC_P$, or any other HDR-specific color formats (such as, HLG) differ from existing codec friendly video signals such as YCbCr, this difference may include statistical differences between the color formats which may comprise color spaces, color samplings and EOTFs. One possible conversion is the codec transform for broadcast of a 10-bit YCbCr 4:2:2 PQ input signal to yield an IPTPQ or $IC_TC_P$ 4:2:0 output signal from encoding. In one example, a color format conversion from YCbCr to IPTPQ or $IC_TC_P$ may be performed. The chroma information in an IPTPQ or $IC_TC_P$ signal may be rich in chroma information and poor in luma information. Without reshaping, the chroma portion of the signal may require many bits to encode and assign fewer bits to luma, resulting in a color rich, yet motion blurred picture. Thus, reshaping may make the chroma signal more compression friendly and allow a picture both rich in color and sharp in detail.

## EXAMPLES

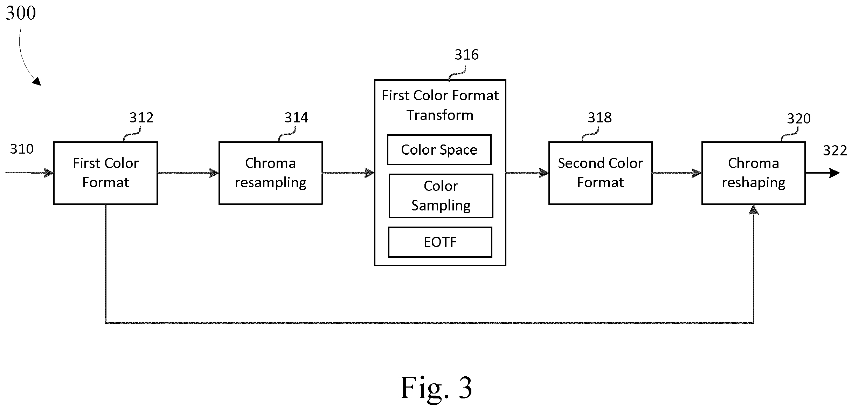

FIG. 3 depicts in more detail an example process (300) for the chroma reshaping in accordance with an embodiment. An input signal 310 is received and is rendered 312 in a first color format such as a 10 bit YCbCr 4:2:2, which in this instance is considered compression friendly. The phrase compression friendly in this example indicates that the standard deviation of the rendered signal is well controlled and does not have an excessively long tail. The length of the tail indicates the energy required to compress the signal, if the tail is short, the compression does not require a large number of bits. The chroma is resampled 314 in which statistical characteristics of the rendered signal are determined for future matching. The color format is transformed 316 and the color space, color sampling and/or EOTF are converted, yielding a codec unfriendly second color format 318. The codec unfriendly transform having unwieldy statistical characteristics which will be reviewed against the statistical characteristics of the resampled signal. A chroma reshaping 320 is then performed in which the transformed signal 318 is modified or reshaped to mimic the statistical characteristics of the compression friendly signal 312, yielding a reshaped signal 322.

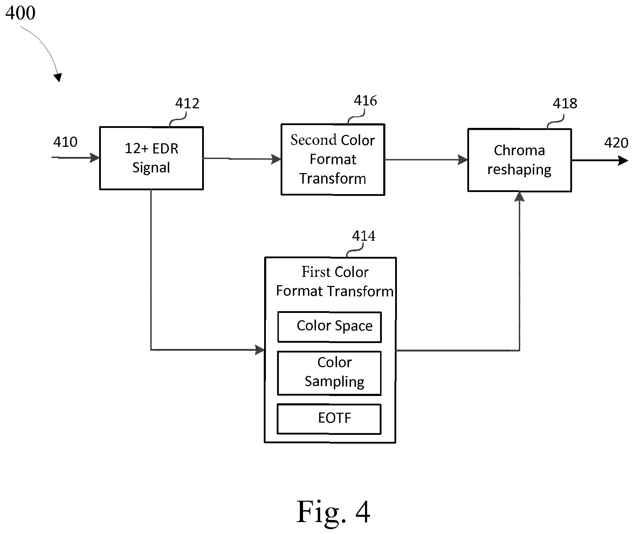

FIG. 4 depicts in more detail an example process 400 for the chroma reshaping in accordance with an embodiment. As depicted in FIG. 4, an input signal 410 may be a 12+ bit EDR signal 412, i.e. an EDR signal having a bit depth of 12 bits or more per component. The input signal undergoes two color format transforms, the first color format transform 414 transforms the input signal into a coder friendly color format such as YCbCr and the second color format transform 416 transforms the input signal into a coder unfriendly format such as IPT-PQ. A statistical analysis of the coder friendly format will yield a set of encoder and compression friendly statistical parameters. Thus, a color format transform 416 of the EDR signal 412 into a color unfriendly format such as IPT-PQ may be reshaped 418 to match some of the statistical parameters of the coder friendly format, thus making the signal compression easier. This reshaping of the color format allows richer colors to be viewed while still retaining the sharpness and fluidity of motion of the picture, i.e. the luma of the signal.

Using chroma reshaping, it may be possible to increase luma peak signal to noise ratio up to 1dB, average around 0.75dB for IPTPQ and up to 1.37 dB and average 0.75 dB for ICtCp. One method of this disclosure will be to reshape with a view toward the reference codec friendly signal, such that the reshaped signal has similar characteristics as the reference codec friendly signal.

**CHROMA SIGNAL CHARACTERISTICS AND TRANSFORM**

The standard deviation of a signal may represent the amount of energy contained in the signal and thus a bit rate to compress the signal. If a standard deviation of the distribution of color saturation of an IPT-PQ signal is analyzed, the color saturation may have a long standard deviation tail, indicating a higher amount of energy to encode the signal. This higher energy may translate to a higher bit count to encode the data, leaving the luma portion of the signal lacking in bits which translates into a loss of detail. What is sought is a way to reduce the energy of encoding the color in order to retain the sharpness of detail communicated by the luma portion of the signal.

**TRANSFORM SIGNAL CHARACTERISTICS**

A low local standard deviation may be obtained utilizing current codecs to perform the transform. Reshaping may change the signal statistical characteristics. The following is a simple mathematical proof.

Denote the $i^{th}$ pixel of the $j^{th}$ frame within a scene of the first signal as $s_{ji}$ and the corresponding pixel in the second signal as $v_{ji}$. Assume each frame has P pixels. Let the bit depth in the base layer (BL) is *BL_bitdepth*, the number of possible values of BL is $N = 2^{BL\_bitdepth}$. If a reshaping function $v = f(s)$, is utilized and the dynamic range between pixels is similar, a linear reshaping may be used having a slope $m_1$ and intercept $m_0$ to model the forward reshaping:

$$v_{ji} = m_1 \cdot s_{ji} + m_0 .$$

Let the variance in the EDR signal around pixel *i* at frame *j* be computed as:

$$\text{var}_{V\,ji} = \frac{1}{N} \sum_i (v_{ji} - \frac{1}{N} \sum_i v_{ji})^2 ,$$

$$\text{var}_{S\,ji} = \frac{1}{N} \sum_i (s_{ji} - \frac{1}{N} \sum_i s_{ji})^2 .$$

The mean after reshaping becomes:

$$\bar{v}_{ji}$$

$$= \frac{1}{N} \sum_i v_{ji}$$

$$= \frac{1}{N} \sum_i (m_1 \cdot s_{ji} + m_0)$$

$$= \frac{m_1}{N} \sum_i s_{ji} + m_0$$

The variance in a base layer (BL) is given by:

$$\text{var}_{V_{ji}}$$

$$= \frac{1}{N} \sum_i \left( v_{ji} - \bar{v}_{ji} \right)^2$$

$$= \frac{1}{N} \sum_i \left( m_1 \cdot s_{ji} + m_0 - \frac{m_1}{N} \sum_i s_{ji} - m_0 \right)^2$$

$$= \frac{1}{N} \sum_i \left( m_1 \cdot \left( s_{ji} - \frac{1}{N} \sum_i s_{ji} \right) \right)^2$$

$$= m_1^2 \cdot \frac{1}{N} \sum_i \left( s_{ji} - \frac{1}{N} \sum_i s_{ji} \right)^2$$

$$= m_1^2 \cdot \text{var}_{S_{ji}}$$

The standard deviation is then:

$$\sigma_{V_{ji}} = m_1 \cdot \sigma_{S_{ji}}.$$

Indicating that the characteristics of signal may be modified via reshaping.

## ONE POSSIBLE FRAMEWORK

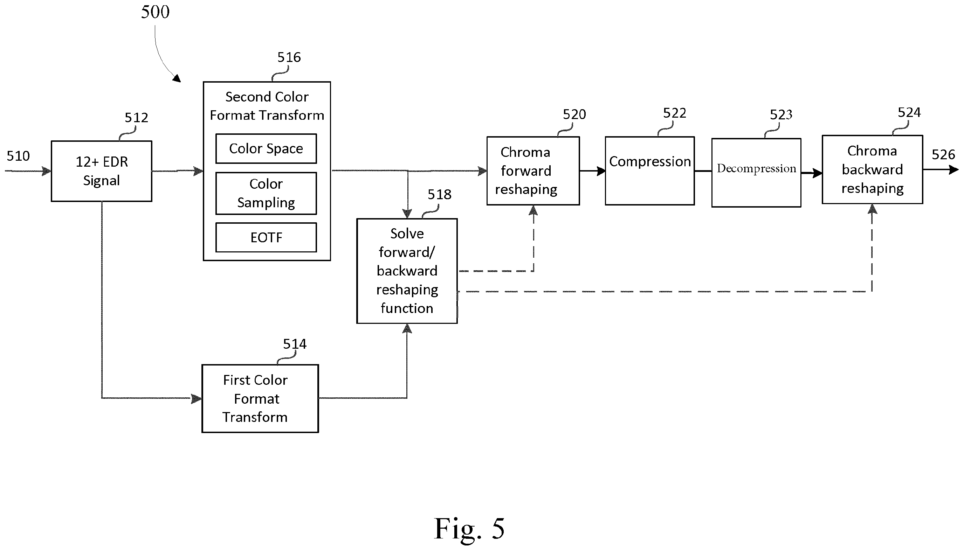

One possible solution is depicted in FIG. 5, a signal 510 is input and comprises a 12+ bit EDR signal 512, i.e. an EDR signal having a bit depth of 12 bits or more per component, that is transformed using a first color format transform 514 into a codec friendly video signal. The 12+ bit EDR signal 512 is also transformed using a second color transform 516 into a codec unfriendly video signal, one that is not modified to reduce a large statistical tail. Both color formats may comprise a color space, and/or a color sampling and/or a EOTF. The first color format is different from the second color format. The first color format is a codec friendly color format, and the first signal has a smaller statistical tail and is more readily compressed. The first and second signals are used to determine a reshaping function in both forward and backward directions 518, e.g. solving a systems of linear equations to obtain the coefficients of a polynomial reshaping function. The adjustment or reshaping of the chroma transform allows for increased luma information in the signal and also allows the reshaped data to be more easily compressed. The chroma component of the second signal is reshaped in a forward direction 520 and the reshaped signal is included in a third video signal. The third video signal may further include the original luma component of the first video signal, or a reshaped version of the luma component of the first video signal. The third video signal may comprise one or more reshaped chrome components. For example, the first video signal may comprise two chroma components, and a respective chroma reshaping function is applied to each of said chroma components, wherein the chroma reshaping function may be different for the different chroma components, and the third video signal may include the two reshaped chroma components and one of an original luma component of the first video signal and a reshaped luma component. The third video signal is compressed 522 using an encoder to obtain a coded bitstream. The decoder is represented by blocks 523 and 524. The output of the encoder, i.e. the compressed third signal, is decompressed 523 and subsequently the backward reshaping function is applied 524 to obtain the decoded signal 526. When a second signal is reshaped to a third video signal, that operation is called forward reshaping, since a real signal is converted into the reshaped color format. At the decoder side, when a reshaped signal is converted back to a real signal color format, this operation is called backward reshaping. The backward reshaping is the inverse operation of forward reshaping to bring back the third video signal to the second video signal, i.e. to undo the forward chroma reshaping.

The chroma reshaping function may optionally be a one-to-one function, i.e. an injective function and may optionally also be onto / surjective, i.e. the function may be bijective.

One possible solution, is to determine a reshaping function that maps the second signal to the first signal, such as a prediction function. The prediction function should be stable across an entire scene and may take several forms, such as a single polynomial, a look up table, a multi-section polynomial and the like.

Assuming that the $i^{th}$ pixel of the $j^{th}$ frame within a scene of the first signal as $s_{ji}$ and the corresponding pixel in the second signal as $v_{ji}$ and that each frame has P pixels. Let the bit depth in the base layer is *BL_bitdepth,* the number of possible values in BL is $N = 2^{BL\_bitdepth}$.

**SINGLE POLYNOMIAL**

A second order polynomial is used in this example, however, in many cases, a first order equation may suffice. In another example, the reshaping function may be defined by a first order equation having an intercept of zero, i.e. a reshaping function that corresponds to a constant scaling factor: $v_{ji} = m_1 * s_{ji}$.

The reference pixel at $i^{th}$ pixel of the $j^{th}$ frame may be estimated from a polynomial predictor with coefficients $m_0$, $m_1$, and $m_2$. The coefficients are obtained from frames accumulated within a scene.

$$\hat{v}_{ji} = m_0 + m_1 \cdot s_{ji} + m_2 \cdot \left(s_{ji}\right)^2.$$

For frame $j$:

$$\begin{bmatrix} \hat{v}_{j0} \\ \hat{v}_{j1} \\ \hat{v}_{j2} \\ \vdots \\ \hat{v}_{j,P-1} \end{bmatrix} = \begin{bmatrix} 1 & s_{j0} & s_{j0}^2 \\ 1 & s_{j1} & s_{j1}^2 \\ 1 & s_{j2} & s_{j2}^2 \\ \vdots & \vdots & \vdots \\ 1 & s_{j,P-1} & s_{j,P-1}^2 \end{bmatrix} \begin{bmatrix} m_{j0} \\ m_{j1} \\ m_{j2} \end{bmatrix},$$

or

$$\hat{\mathbf{v}}_j = \mathbf{S}_j \mathbf{m}_j,$$

$$\hat{\mathbf{v}}_j = \begin{bmatrix} \hat{v}_{j0} \\ \hat{v}_{j1} \\ \hat{v}_{j2} \\ \vdots \\ \hat{v}_{j,P-1} \end{bmatrix}, \quad \mathbf{S}_j = \begin{bmatrix} 1 & s_{j0} & s_{j0}^2 \\ 1 & s_{j1} & s_{j1}^2 \\ 1 & s_{j2} & s_{j2}^2 \\ \vdots & \vdots & \vdots \\ 1 & s_{j,P-1} & s_{j,P-1}^2 \end{bmatrix} \quad \mathbf{m}_j = \begin{bmatrix} m_{j0} \\ m_{j1} \\ m_{j2} \end{bmatrix}.$$

where

A least squared solution for frame $j$ is given by:

$$\mathbf{m}_j = ((\mathbf{S}_j)^T (\mathbf{S}_j))^{-1} ((\mathbf{S}_j)^T \mathbf{v}_j).$$

If the two major matrixes are defined as:

$$\mathbf{B}_j = \begin{bmatrix} b_{j,00} & b_{j,01} & b_{j,02} \\ b_{j,10} & b_{j,11} & b_{j,12} \\ b_{j,20} & b_{j,21} & b_{j,22} \end{bmatrix}$$

$$= (\mathbf{S}_j)^T (\mathbf{S}_j)$$

$$= \begin{bmatrix} 1 & 1 & 1 & \cdots & 1 \\ s_{j0} & s_{j1} & s_{j2} & \cdots & s_{j,P-1} \\ s_{j0}^2 & s_{j1}^2 & s_{j2}^2 & \cdots & s_{j,P-1}^2 \end{bmatrix} \begin{bmatrix} 1 & s_{j0} & s_{j0}^2 \\ 1 & s_{j1} & s_{j1}^2 \\ 1 & s_{j2} & s_{j2}^2 \\ \vdots & \vdots & \vdots \\ 1 & s_{j,P-1} & s_{j,P-1}^2 \end{bmatrix}$$

Elements may be expressed as:

$$b_{j,00} = P$$

$$b_{j,01} = b_{j,10} = \sum_{i=0}^{P-1} s_{ji}$$

$$b_{j,20} = b_{j,11} = b_{j,02} = \sum_{i=0}^{P-1} (s_{ji})^2$$

$$b_{j,21} = b_{j,12} = \sum_{i=0}^{P-1} (s_{ji})^3$$

$$b_{j,22} = \sum_{i=0}^{P-1} (s_{ji})^4$$

The second matrix then becomes:

$$\mathbf{a}_j = \begin{bmatrix} a_{j,0} \\ a_{j,1} \\ a_{j,2} \end{bmatrix}$$

$$= (\mathbf{S}_j)^T \mathbf{v}_j ,$$

$$= \begin{bmatrix} 1 & 1 & 1 & \cdots & 1 \\ s_{j0} & s_{j1} & s_{j2} & \cdots & s_{j,P-1} \\ s_{j0}^2 & s_{j1}^2 & s_{j2}^2 & \cdots & s_{j,P-1}^2 \end{bmatrix} \begin{bmatrix} v_{j0} \\ v_{j1} \\ v_{j2} \\ \vdots \\ v_{j,P-1} \end{bmatrix}$$

Elements may be expressed as:

$$a_{j,0} = \sum_{i=0}^{P-1} v_{ji}$$

$$a_{j,1} = \sum_{i=0}^{P-1} (s_{ji} v_{ji})$$

$$a_{j,2} = \sum_{i=0}^{P-1} ((s_{ji})^2 v_{ji}).$$

To obtain the scene based solution, for frame 0 to $J$- 1, matrix B and a may be obtained from:

$$\mathbf{B} = \sum_{j=0}^{J-1} \mathbf{B}_j,$$

$$\mathbf{a} = \sum_{j=0}^{J-1} \mathbf{a}_j.$$

The matrix elements may be obtained by accumulating values across frames.
Coefficients may be obtained using:

$$\mathbf{m} = \mathbf{B}^{-1} \mathbf{a}.$$

The coefficients of the polynomial may be transmitted from the encoder to the decoder via metadata. The decoder uses the transmitted coefficients for the backward reshaping function.
For example, for the first order, the backward reshaping becomes:

$$\tilde{s}_{ji} = \frac{1}{m_1} v_{ji} - \frac{m_0}{m_1}.$$

The entire range may be shifted to the center.
Alternatively, the backward reshaping may be performed using a look-up table transmitted from the encoder to the decoder via metadata (such as Supplemental Enhancement Information (SEI) messaging).

**SCENE BASED ONE DIMENSIONAL LOOK UP TABLE**

In non-linear cases a one dimensional look up table (1D-LUT) may be used to capture the reshaping function. One possible solution may take the form:

for( $b = 0 :\ b < N; b$ ++ )

finding the set of pixel having value $b$ within the scene:

$$\Phi_b = \{i, j \mid s_{ji} = b, j = 0,..., F-1\}$$

obtaining the average value in the corresponding pixel position from original EDR data:

$$m_b = \frac{1}{|\Phi_b|} \sum_{i, j \in \Phi_b} v_{ji}$$

End

The $\{m_b\}$ where $b = 0, \ldots, 2^{BL\_bitdepth} - 1$ may be the scene-based code in terms of Mean Squared Error (MSE). Another algorithm that may be used to obtain the LUT is listed below.

// initialization

$$h_{jb} = 0 \quad \text{for } b = 0, ..., 2^{\text{BL\_bitdepth}} - 1$$

$$w_{jb} = 0 \quad \text{for } b = 0, ..., 2^{\text{BL\_bitdepth}} - 1$$

// scan for each pixel

for ( $j = 0 : j < F; j ++$ )

    for ( $i = 0 ; i < P; i++$ )

        $h_{j,s_{ji}} ++;$

        $w_{j,s_{ji}} += v_{ji}$

    end

end

// for each codeword, find optimal LUT

$1^{\text{st}}$_flag = 0;

for ( $b = 0 ; b < N; b ++$ )

    if( $\sum_{j=0}^{F-1} h_{j,b} > \Delta$ )

        if( $1^{\text{st}}$_flag == 0 )

            $1^{\text{st}}$_flag = 1

            $\theta = b / N;$

        end

$$m_b = \frac{\sum_{j=0}^{F-1} w_{j,b}}{\sum_{j=0}^{F-1} h_{j,b}}$$

    else

        $m_b = -1$

    end

end

// interpolate entries with $m_b = -1$

for ( $b = 0 ; b < N; b ++$ )

    if( $m_b = -1$ )

**13**

linearly interpolate from nearest available neighbors

end

end

// Detecting decreased slope correction and flip the sign

$$m_0' = 0$$

for ( $b = 1$ ; $b < N$; $b$ ++ )

$$\Delta m_b = \left| m_b - m_{b-1} \right|$$

$$m_b' = m_{b-1}' + \Delta m_b$$

end

for ( $b = 0$ ; $b < N$; $b$ ++ )    // add the offset back

$$m_b' = m_b' + \theta$$

end

// smoothen curve

for ( $b = W$ ; $b < N\text{-}W$; $b$ ++ )

$$\tilde{m}_b = \frac{1}{2W+1} \sum_{k=b-W}^{b+W} m_k'$$

end

// clip to valid range

for ( $b = 0$ ; $b < N$; $b$ ++ )    // add the offset back

$$\tilde{m}_b = \text{clip3}(\tilde{m}_b, 0, N\text{-}1);$$

end

The one dimensional look up table may also be approximated via a second order polynomial.

**REAL-TIME RESHAPING**

A sliding window with $\alpha$ look ahead frames and $\beta$ past frames may be used to perform real-time reshaping. With a look ahead sliding, statistics may be collected within $\alpha + \beta + 1$ frames, and then calculate the reshaping function for frame $j$.

**REAL-TIME POLYNOMIAL**

To obtain the scene based solution, for frame $j - \beta$ to $j + \alpha$, matrix **B** and **a** may be computed as:

$$\mathbf{B} = \sum_{k=j-\beta}^{j+\alpha} \mathbf{B}_k \,,$$

$$\mathbf{a} = \sum_{k=j-\beta}^{j+\alpha} \mathbf{a}_k \,.$$

The matrix elements may be obtained by accumulating values across frames. Coefficients for frame j may be obtained using:

$$\mathbf{m} = \mathbf{B}^{-1}\mathbf{a} \,.$$

**REAL-TIME ONE DIMENSIONAL LOOK UP TABLE**

The following algorithm may be used to construct a 1D-LUT on a frame by frame basis.

// initialization for each frame

$h_{j+\alpha,b} = 0$  for $b = 0, ..., 2^{\text{BL\_bitdepth}} - 1$

$w_{j+\alpha,b} = 0$  for $b = 0, ..., 2^{\text{BL\_bitdepth}} - 1$

// scan for each pixel for the look ahead frame

for ( $i = 0$ ; $i < P$; $i$++ )

$\quad h_{j+\beta,s_{ji}}$ ++;

$\quad w_{j+\beta,s_{ji}}$ += $v_{ji}$

end

// for each codeword, find optimal LUT

$1^{\text{st}}\_\text{flag} = 0;$

```
for ( b = 0 ; b < N; b ++ )
```

$$\text{if}( \sum_{k=j-\beta}^{j+\alpha} h_{k,b} > \Delta )$$

```
        if(1st_flag == 0 )
            1st_flag = 1
            θ = b / N ;
        end
```

$$m_b = \frac{\displaystyle\sum_{k=j-\beta}^{j+\alpha} w_{k,b}}{\displaystyle\sum_{k=j-\beta}^{j+\alpha} h_{k,b}}$$

```
    else
```

$$m_b = -1$$

```
    end
end
```

```
// interpolate entries with
```
$m_b = -1$
```
for ( b = 0 ;  b < N; b ++ )
    if(
```
$m_b = -1$
```
 )
        linearly interpolate from nearest available neighbors
    end
end
```

```
// Detecting decreased slope correction and flip the sign
```

$$m_0' = 0$$

```
for ( b = 1 ;  b < N; b ++ )
```

$$\Delta m_b = \left| m_b - m_{b-1} \right|$$

$$m_b' = m_{b-1}' + \Delta m_b$$

```
end
```

```
for ( b = 0 ;  b < N; b ++ )   // add the offset back
```

$$m_b' = m_b' + \theta$$

end

// smoothen curve

for ( $b$ = W ; $b$ < $N$-$W$; $b$ ++ )

$$\tilde{m}_b = \frac{1}{2W+1} \sum_{k=b-W}^{b+W} m_k'$$

end

// clip to valid range

for ( $b$ = 0 ; $b$ < $N$; $b$ ++ )    // add the offset back

$$\tilde{m}_b = \text{clip3}(\tilde{m}_b, 0, N\text{-}1);$$

end

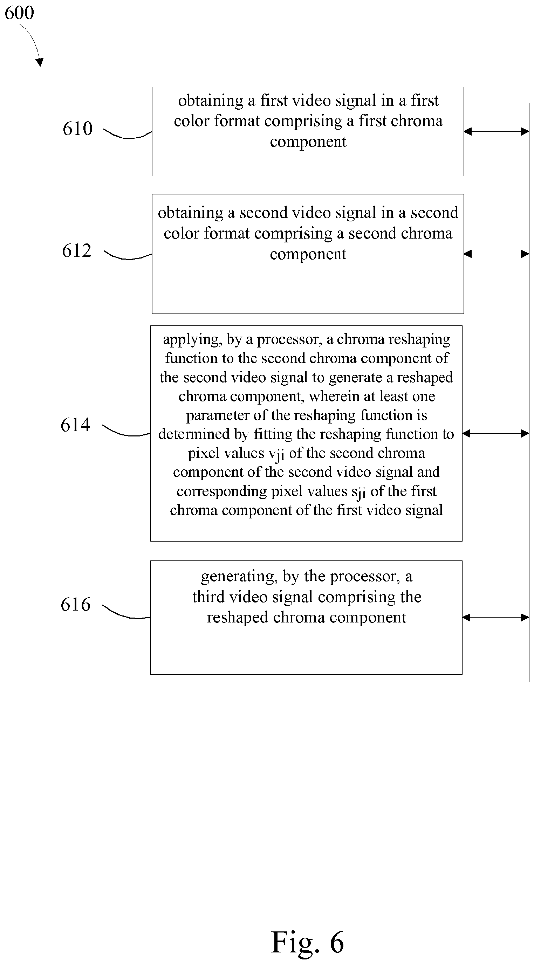

FIG. 6 depicts a first method to reshape a high-dynamic range signal comprising obtaining 610 a first video signal in a first color format comprising a first chroma component. The method further comprises obtaining a second video signal in a second color format comprising a second chroma component. Step 614 comprises applying, by a processor, a chroma reshaping function to the second chroma component of the second video signal to generate a third chroma component, wherein at least one parameter of the reshaping function is determined by fitting the reshaping function to pixel values $V_{ji}$ (also referred to as codewords) of the second chroma component of the second video signal and corresponding pixel values (codewords) $S_{ji}$ of the first chroma component of the first video signal. Therefore, the at least one parameter may be selected so that a statistical characteristic of the reshaped chroma component matches the statistical characteristic of the first chroma component of the first video signal according to a matching criterion. The statistical characteristic may be a standard deviation, a mean square error, a signal energy and the like. The method further comprises coding 616, the third video signal comprising the reshaped chroma component with an encoder to generate a coded bitstream. Optionally, the method further applies, by the processor, a luma reshaping function to a luma component of the second video signal to generate a reshaped luma component, utilizing the statistical characteristic matching criterion. The third video signal may comprise, in addition to the reshaped chroma component, at least one of a first luma component of the first video signal, a second luma component of the second video signal and the reshaped luma component.

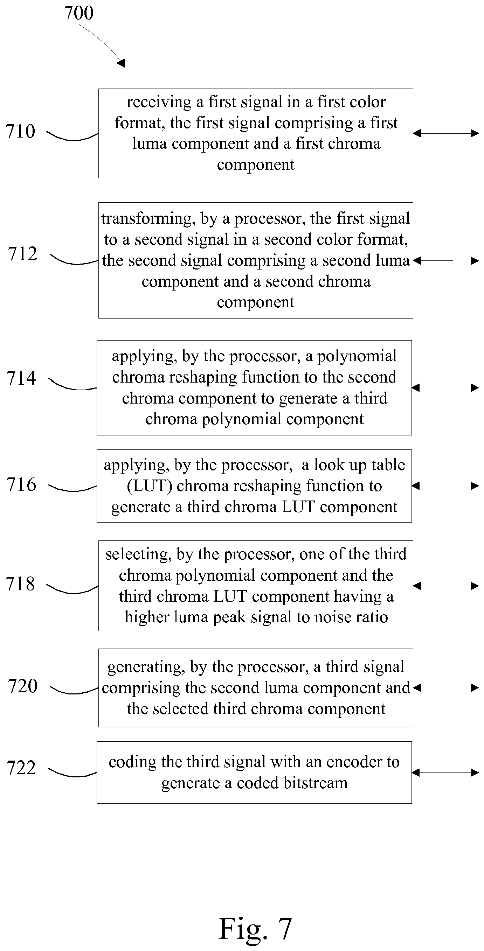

FIG. 7 depicts a second method to reshape a high-dynamic range signal comprising receiving 710 a first signal in a first color format, the first signal comprising a first luma component and a first chroma component. The method additionally comprises transforming 712, by a processor, the first signal to a second signal in a second color format, the second signal comprising a second luma component and a second chroma component. The method also comprises both applying 714, by the processor, a polynomial reshaping function to the second chroma component to generate a third chroma polynomial component and applying 716, by the processor, a look up table (LUT) reshaping function to generate a third chroma LUT component. After the two reshaping functions have been applied, selecting 718, by the processor, one of the third chroma polynomial component and the third chroma LUT component having a higher respective peak luma signal to noise ratio, generating 720, by the processor, a third signal comprising the second luma component and the selected third chroma component and coding 722 the third signal with an encoder to generate a coded bitstream. In this example the reshaping yielding the sharpest luma components for the reshaped signal are chosen.

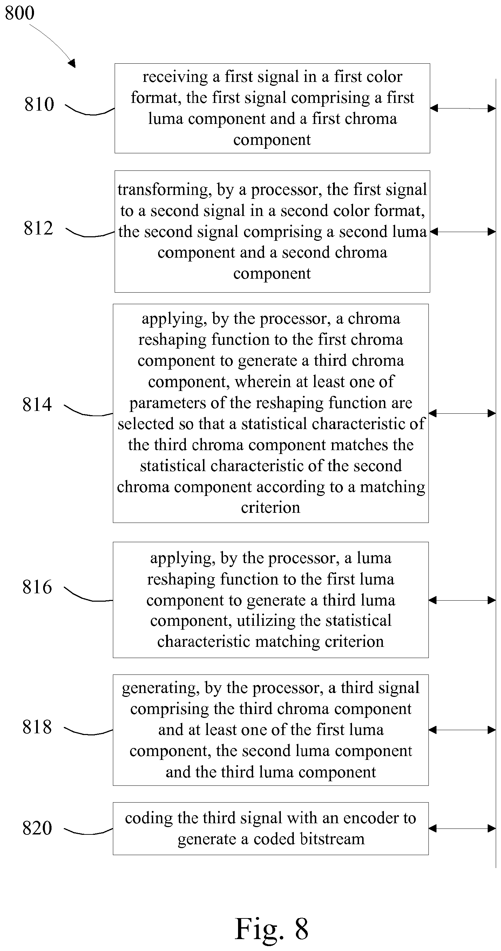

FIG. 8 depicts a third method to reshape a high-dynamic range signal comprising receiving 810 a first signal in a first color format, the first signal comprising a first luma component and a first chroma component. The method comprises transforming 812, by a processor, the first signal into a second signal in a second color format, the second signal comprising a second luma component and a second chroma component. At this point applying 814, by the processor, a chroma reshaping function to the first chroma component to generate a third chroma component, wherein at least one of parameters of the reshaping function are selected so that a statistical characteristic of the third chroma component matches the statistical characteristic of the second chroma component according to a matching criterion.

The method then optionally applies 816, by the processor, a luma reshaping function to the first luma component to generate a third luma component, utilizing the statistical characteristic matching criterion. The statistical characteristic may be a standard deviation, a mean square error, a signal energy and the like. Then generating 818, by the processor, a third signal comprising the third chroma component and at least one of the first luma component, the second luma component and the third luma component and coding 820 the third signal with an encoder to generate a coded bitstream.

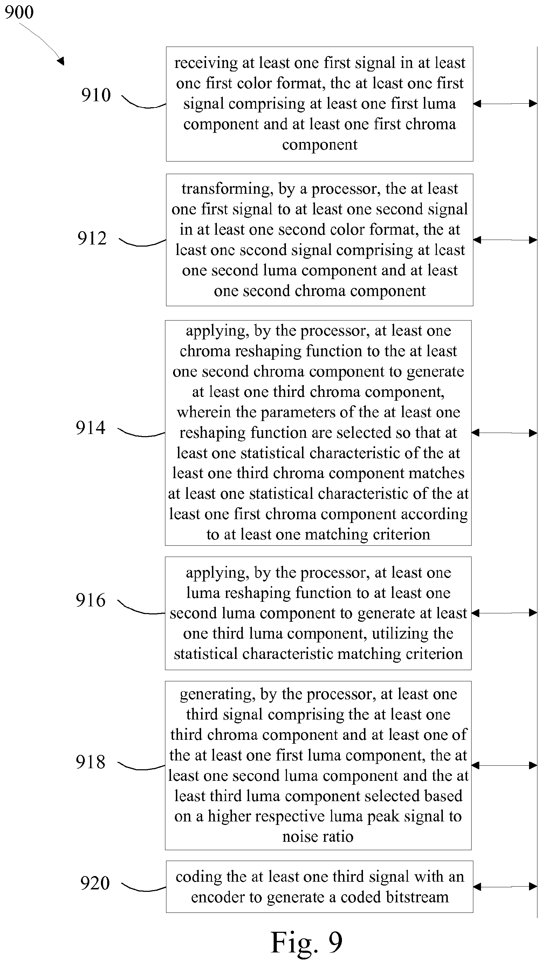

FIG. 9 depicts a fourth method to reshape a high-dynamic range signal comprising receiving 910 at least one first signal in at least one first color format, the at least one first signal comprising at least one first luma component and at least one first chroma component and transforming 912, by a processor, the at least one first signal to at least one second signal in at least one second color format, the at least one second signal comprising at least one second luma component and at least one second chroma component. The method then comprises applying 914, by the processor, at least one reshaping function to the at least one second chroma component to generate at least one third chroma component, wherein the parameters of the at least one reshaping function are selected so that at least one statistical characteristic of the at least one third chroma component matches at least one statistical characteristic of the at least one first chroma component according to at least one matching criterion. The method then optionally applies 916, by the processor, at least one luma reshaping function to at least one second luma component to generate at least one third luma component, utilizing the statistical characteristic matching criterion. Then the method comprises generating 918, by the processor, at least one third signal comprising the at least one third chroma component and at least one of the first luma component, the second luma component and the third luma component selected based on a higher respective luma peak signal to noise ratio and coding 920 the at least one third signal with an encoder to generate a coded bitstream. In this example, any number of luma and chroma components may be reviewed for selection based on statistical matching to the reference signal.

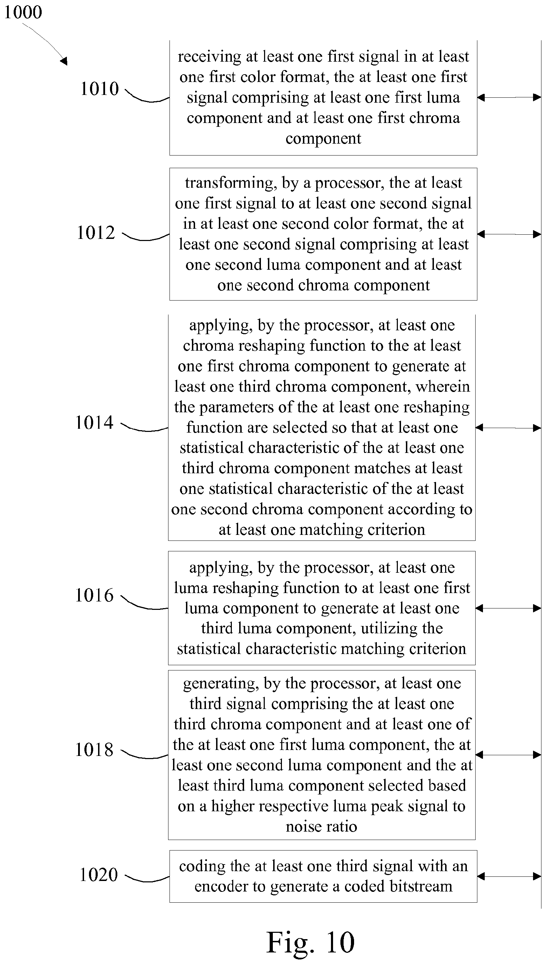

FIG. 10 depicts a fifth method to reshape a high-dynamic range signal comprising receiving 1010 at least one first signal in at least one first color format, the at least one first signal comprising at least one first luma component and at least one first chroma component and transforming 1012, by a processor, the at least one first signal to at least one second signal in at least one second color format, the at least one second signal comprising at least one second luma component and at least one second chroma component. The method then comprises applying 1014, by the processor, at least one reshaping function to the at least one first chroma component to generate at least one third chroma component, wherein the parameters of the at least one reshaping function are selected so that at least one statistical characteristic of the at least one third chroma component matches at least one statistical characteristic of the at least one second chroma component according to at least one matching criterion. The method then optionally applies 1016, by the processor, at least one luma reshaping function to at least one first luma component to generate at least one third luma component, utilizing the statistical characteristic matching criterion. Then the method comprises generating 1018, by the processor, at least one third signal comprising the at least one third chroma component and at least one of the first luma component, the second luma component and the third luma component selected based on a higher respective luma peak signal to noise ratio and coding 1020 the at least one third signal with an encoder to generate a coded bitstream. In this example, any number of luma and chroma components may be reviewed for selection based on statistical matching to the reference signal.

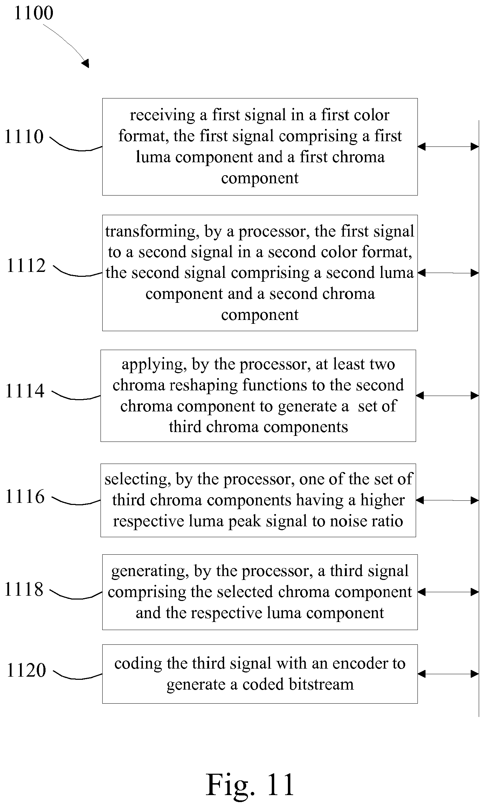

FIG. 11 depicts a sixth method to reshape a high-dynamic range signal, in this example the peak signal to noise ratio of the luma component determines the reshaping function selected. The method comprises receiving 1110 a first signal in a first color format, the first signal comprising a first luma component and a first chroma component. In this example the first signal is a reference signal which is codec friendly. The method then transforms 1112, by a processor, the first signal to a second signal in a second color format, the second signal comprising a second luma component and a second chroma component. Then the method applies 1114, by the processor, at least two reshaping functions to the second chroma component to generate a set of third chroma components. The method may apply more than two reshaping functions to the second chroma component. At which point the method selects 1116, by the processor, one of the set of third chroma components having a higher respective luma peak signal to noise ratio, which tends to indicate a sharper picture. Then generating 1118, by the processor, a third signal comprising the selected chroma component and the respective luma component and coding 1020 the third signal with an encoder to generate a coded bitstream. In this example any number of reshaping functions may be applied and the reshaping function generating the highest respective luma peak signal to noise ratio is selected.

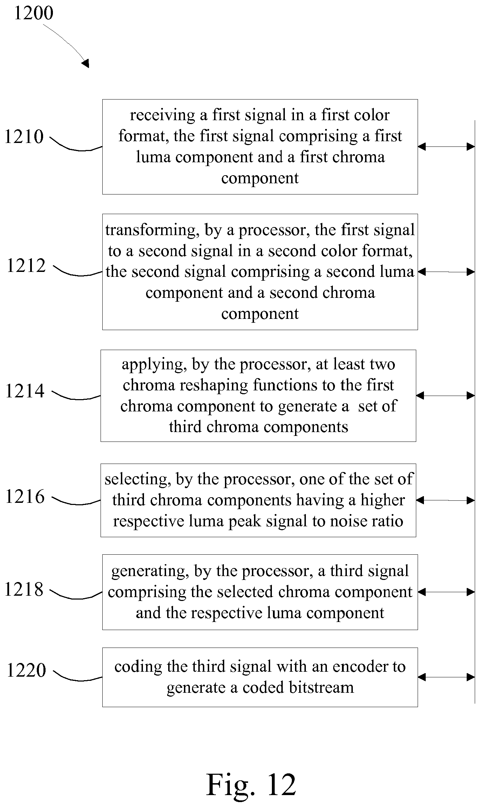

FIG. 12 depicts a seventh example method 1200 to reshape a high-dynamic range signal having an unfriendly first signal, in this example the peak signal to noise ratio of the luma component determines the reshaping function selected. The method comprises receiving 1210 a first signal in a first color format, the first signal comprising a first luma component and a first chroma component. In this example the first signal is codec unfriendly. The method then transforms 1212, by a processor, the first signal to a second signal in a second color format, the second signal comprising a second luma component and a second chroma component. Then the method applies 1214, by the processor, at least two reshaping functions to the first chroma component to generate a set of third chroma components. The method may apply more than two reshaping functions to the first chroma component. At which point the method selects 1216, by the processor, one of the set of third chroma components having a higher respective luma peak signal to noise ratio, which tends to indicate a sharper picture. Then generating 1218, by the processor, a third signal comprising the selected chroma component and the respective luma component and coding 1220 the third signal with an encoder to generate a coded bitstream. In this example any number of reshaping functions may be applied and the reshaping function generating the highest respective luma peak signal to noise ratio is selected.

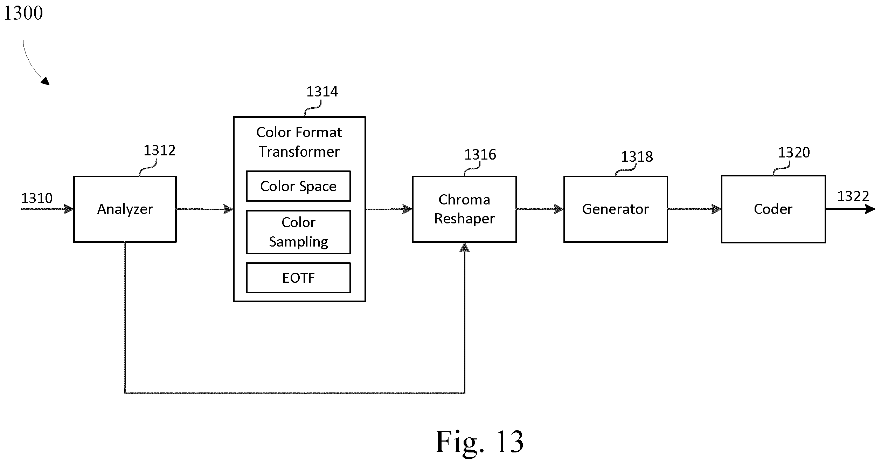

FIG. 13 depicts an example reshaping encoder to reshape a high-dynamic range signal. The reshaping encoder comprises an analyzer 1312, the analyzer receives a reference signal 1310, in this example, the reference signal is codec friendly. The term codec friendly indicates that the first signal 1310 is in a first color format, comprising a first luma component and a first chroma component that is easily compressed. The analyzer 1312 determines the statistical characteristics of at least the first chroma component. The analyzer 1312 may analyze multiple statistical characteristics of both the first chroma component and the first luma component.

A color format transformer 1314 which may comprise the color space, color sampling and EOTF converter of the example of FIG. 13 is coupled to the analyzer and transforms the first signal into a second signal in a second color format, having a second luma component and a second chroma component. This transformation may be in a codec unfriendly code which enhances the color representation of the first signal. The transformer creates a second signal having statistical characteristics that differ from the first signal. These different statistical characteristics may expand the bit representation of the chroma portion of the signal at the expense of the luma portion of the signal.

A chroma reshaper 1316 is coupled to the transformer and to the analyzer. The chroma reshaper modifies or reshapes the second chroma component to a reshaped chroma component. The reshaping is meant to mimic a statistical characteristic of the reshaped chroma to match the statistical characteristic of the first or reference chroma. The chroma reshaper utilizes a reshaping function that causes at least one statistical characteristic of the reshaped chroma component to match the same at least one statistical characteristic of the first chroma component according to at least one matching criterion.

A generator 1318 is coupled to the chroma reshaper. The generator appends the reshaped chroma component to the second luma component so as to meld a mimicked codec friendly representation of the codec unfriendly chroma with the un-retouched codec unfriendly luma component. The codec unfriendly luma component being typically much easier to compress than a codec unfriendly chroma component.

A coder 1320 is coupled to the generator to encode the third video signal 1322, which is comprised of the reshaped chroma component and at least one of the first luma component, the second luma component and the third luma component.

Several methods have been discussed as to how to reshape the chroma signal from a codec unfriendly color format to a reshaped signal whose signal characteristics are similar to a codec friendly color format. The disclosure provides multiple low complexity solutions that may be performed in real time and may provide a sharper picture luma due to less bits being spent on chroma.

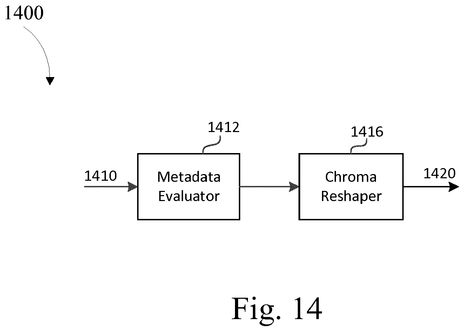

FIG. 14 depicts an example reshaping decoder to reshape a high-dynamic range signal. The reshaping decoder comprises a metadata evaluator 1412, the metadata evaluator receives an input signal 1410, in this example the third video signal. The metadata has a backward reshaping function for the third video signal. In this example the third video signal is presented in a codec unfriendly color format. The luma component and chroma components use different reshaping functions. The backward reshaping functions for one channel of luma and two channels of chroma will be signaled by metadata, in one example, three channels, three different functions. The decoder thus uses different backward reshaping functions to convert reshaped channels back to an original color format. The metadata evaluator 1412 receives the input signal, in this case the third signal and the metadata allowing an original unshaped signal 1420 to be reconstructed.

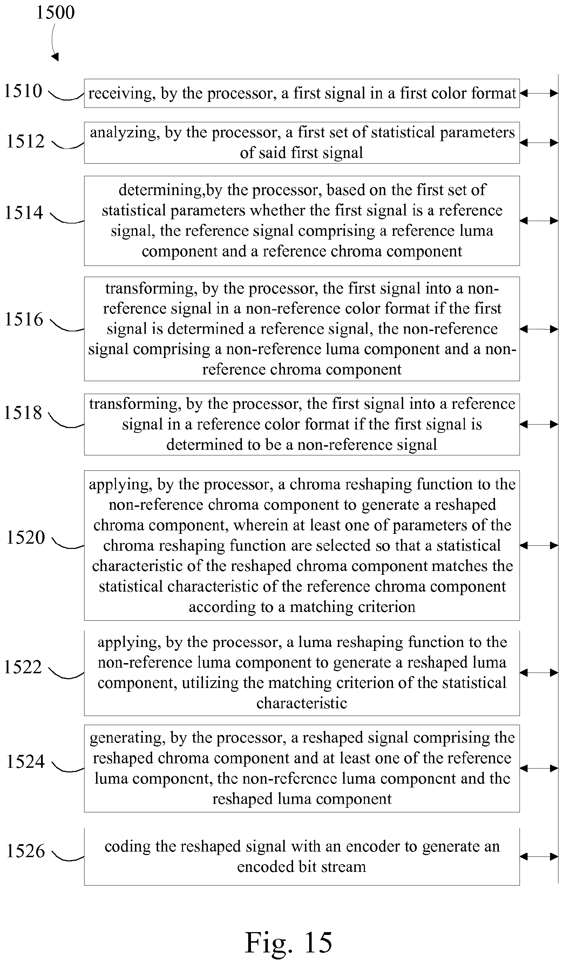

FIG. 15 depicts a method to reshape a high-dynamic range signal where the first signal is indeterminate, meaning it is not known whether the incoming signal is a reference signal or a codec unfriendly signal. The method comprising receiving 1510, a first signal in a first color format, analyzing 1512, a first set of statistical parameters of said first signal and determining 1514, based on the first set of statistical parameters whether the first signal is a reference signal. For example, the first signal is determined to be a reference signal if a certain statistical parameter, e.g. the standard deviation, the variance, the root mean square error or the mean square error, is below a predetermined threshold. The reference signal comprises a reference luma component and a reference chroma component. The method then comprises transforming 1516, the first signal into a non-reference signal in a non-reference color format if the first signal is determined a reference signal, the non-reference signal comprising a non-reference luma component and a non-reference chroma component and transforming 1518, the first signal into a reference signal in a reference color format if the first signal is determined to be a non-reference signal. Then applying 1520, a chroma reshaping function to the non-reference chroma component to generate a reshaped chroma component, wherein at least one of parameters of the chroma reshaping function are selected so that a statistical characteristic of the reshaped chroma component matches the statistical characteristic of the reference chroma component according to a matching criterion. Also optionally applying 1522, a luma reshaping function to the non-reference luma component to generate a reshaped luma component, utilizing the matching criterion of the statistical characteristic, generating 1524, by the processor, a reshaped signal comprising the reshaped chroma component and at least one of the reference luma component, the non-reference luma component and the reshaped luma component and coding 1526 the reshaped signal with an encoder to generate an encoded bit stream.

## EXAMPLE COMPUTER SYSTEM IMPLEMENTATION

Embodiments of the instant disclosure may be implemented with a computer system, systems configured in electronic circuitry and components, an integrated circuit (IC) device such as a microcontroller, a field programmable gate array (FPGA), or another configurable or programmable logic device (PLD), a discrete time or digital signal processor (DSP), an application specific integrated circuit (ASIC), and/or apparatus that includes one or more of such systems, devices or components. The computer and/or IC may perform, control, or execute instructions relating to signal reshaping and coding of images with enhanced dynamic range, such as those described herein. The computer and/or IC may compute any of a variety of parameters or values that relate to the signal reshaping and coding processes described herein. The image and video embodiments may be implemented in hardware, software, firmware and various combinations thereof.

Certain implementations of the disclosure comprise computer processors which execute software instructions which cause the processors to perform a method of the instant disclosure. For example, one or more processors in a display, an encoder, a set top box, a transcoder or the like may implement methods related to signal reshaping and coding of HDR images as described above by executing software instructions in a program memory accessible to the processors. The instant disclosure may also be provided in the form of a program product. The program product may comprise any non-transitory medium which carries a set of computer-readable signals comprising instructions which, when executed by a data processor, cause the data processor to execute a method of the disclosure. Program products according to the disclosure may be in any of a wide variety of forms. The program product may comprise, for example, physical media such as magnetic data storage media including floppy diskettes, hard disk drives, optical data storage media including CD ROMs, DVDs, electronic data storage media including ROMs, flash RAM, or the like. The computer-readable signals on the program product may optionally be compressed or encrypted.

Where a component (e.g. a software module, processor, assembly, device, circuit, etc.) is referred to above, unless otherwise indicated, reference to that component (including a reference to a "means") should be interpreted as including as equivalents of that component any component which performs the function of the described component (e.g., that is functionally equivalent), including components which are not structurally equivalent to the disclosed structure which performs the function in the illustrated example embodiments of the disclosure.

## EQUIVALENTS, EXTENSIONS, ALTERNATIVES AND MISCELLANEOUS

Example embodiments that relate to the efficient signal reshaping and coding of HDR images are thus described. In the foregoing specification, embodiments of the present disclosure have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense. While most discussions within the disclosure pertain to IPT-PQ, the methods and devices may be applicable to other color formats suitable for HDR imaging including ICtCp.

### Claims

1.  A method (300, 400, 500) to reshape a high-dynamic range video signal, the method comprising:

obtaining (312, 414, 514) a first high-dynamic range video signal representing the high-dynamic range video signal in a first color format comprising a first color space that is one of YCbCr, YCoCg and RGB, the first video signal comprising a first chroma component;
obtaining (318, 416, 516) a second high-dynamic range video signal representing the high-dynamic range video signal in a second color format comprising a second color space that is one of IPT and $IC_TC_P$, the second video signal comprising a second chroma component;
applying (320, 418, 520), by a processor, a chroma reshaping function to the second chroma component of the second video signal to generate a reshaped chroma component, wherein the chroma reshaping function maps pixel values of the second chroma component in the second color space to pixel values of the first chroma component in the first color space, wherein at least one parameter of the chroma reshaping function is determined by fitting the chroma reshaping function to pixel values v of the second chroma component of the second video signal and corresponding pixel values s of the first chroma component of the first video signal; and

generating, by the processor, a third video signal comprising the reshaped chroma component.

2. The method of claim 1, wherein the chroma reshaping function comprises a polynomial or a multi-piece polynomial, wherein the at least one parameter of the chroma reshaping function comprises the coefficients of the polynomial or multi-piece polynomial.

3. The method of claim 1, wherein the chroma reshaping function comprises a look up table (LUT) comprising key-value pairs, the keys of the key-value pairs corresponding to pixel values v of the second chroma component and the values of the key-value pairs corresponding to pixel values s of the first chroma component, the at least one parameter comprising the values of the key-value pairs of the LUT.

4. The method of claim 3, wherein for each key corresponding to a pixel value v of the second chroma component of the second video signal, a respective value of the respective key-value pair is determined as an average of corresponding pixel values s of the first chroma component of the first video signal, wherein the method optionally comprises interpolating values of key-value pairs to obtain a value for a key that is not included as pixel value v in the second chroma component of the second video signal.

5. The method of any of the claims 1-4, wherein:

the first video signal is received as an input video signal and the second video signal is obtained by applying a color format transform to the first video signal; or
the second video signal is received as an input video signal and the first video signal is obtained by applying a color format transform to the second video signal.

6. The method of any of the claims 1-4, comprising:

receiving an input video signal;
applying a first color format transform to the input video signal to obtain the first video signal; and
applying a second color format transform to the input video signal to obtain the second video signal.

7. The method of any preceding claim, further comprising coding the third video signal with an encoder to generate a coded bitstream, optionally comprising including in the coded bitstream metadata describing the reshaping function or its inverse.

8. The method of any preceding claim, wherein the at least one parameter of the reshaping function is determined so that a statistical characteristic of the reshaped chroma component matches a same statistical characteristic of the first chroma component according to a matching criterion.

9. The method of claim 8, wherein the matching criterion is to minimize:

a mean square error between pixel values of the first chroma component and corresponding pixel values of the third chroma component; or
a difference of a standard deviation distribution between pixel values of the first chroma component and corresponding pixel values of the pixel third chroma component; or
a difference of an amount of energy distribution in the third signal.

10. The method of any preceding claim, wherein the first video signal further comprises a first luma component and the second video signal further comprises a second luma component, and the third video signal further comprises one of the first luma component of the first video signal, the second luma component of the second video signal and a third luma component obtained by applying, by the processor, a luma reshaping function to the second luma component of the second video signal, wherein optionally the one of the first luma component, the second luma component and the third luma component is selected that has the highest luma peak signal to noise ratio.

11. The method of any preceding claim, wherein the first chroma component is resampled.

12. The method of any preceding claim, wherein:

the first color format comprises at least one of a first color sampling and a first EOTF, wherein the first EOTF optionally is gamma; and/or
the second color format comprises at least one a second color sampling and a second EOTF, wherein the second EOTF optionally is PQ or HLG.

13. A method (523, 524) of decoding a reshaped high-dynamic range video signal, comprising: reshaping a high-dynamic range video signal according to any of the preceding claims;
receiving the reshaped high-dynamic range video signal, comprising a reshaped chroma component;
receiving metadata describing a chroma reshaping function or its inverse;
determining a backward chroma reshaping function from the received metadata;
applying (524) the backward chroma reshaping function to the reshaped chroma component to obtain an output chroma component (526); and
generating an output signal comprising the output chroma component.

14. An apparatus (10) configured to implement the method of any of the claims 1-13.

15. A computer-readable storage medium comprising instructions which, when executed by a processor, cause the processor to carry out a method in accordance with any of the claims 1-13.

**Patentansprüche**

1. Verfahren (300, 400, 500) zum Umformen eines Videosignals mit hohem Dynamikbereich, wobei das Verfahren Folgendes umfasst:

Erhalten (312, 414, 514) eines ersten Videosignals mit hohem Dynamikbereich, welches das Videosignal mit hohem Dynamikbereich in einem ersten Farbformat darstellt, das einen ersten Farbraum umfasst, der einer von YCbCr, YCoCg und RGB ist, wobei das erste Videosignal eine erste Chroma-Komponente umfasst;
Erhalten (318, 416, 516) eines zweiten Videosignals mit hohem Dynamikbereich, welches das Videosignal mit hohem Dynamikbereich in einem zweiten Farbformat darstellt, das einen zweiten Farbraum umfasst, der einer von IPT und $IC_TC_P$ ist, wobei das zweite Videosignal eine zweite Chroma-Komponente umfasst;
Anwenden (320, 418, 520), durch einen Prozessor, einer Chroma-Umformungsfunktion auf die zweite Chroma-Komponente des zweiten Videosignals, um eine umgeformte Chroma-Komponente zu generieren, wobei die Chroma-Umformungsfunktion Pixelwerte der zweiten Chroma-Komponente im zweiten Farbraum zu Pixelwerten der ersten Chroma-Komponente im ersten Farbraum zuordnet, wobei mindestens ein Parameter der Chroma-Umformungsfunktion durch Anpassen der Chroma-Umformungsfunktion an Pixelwerte v der zweiten Chroma-Komponente des zweiten Videosignals und entsprechende Pixelwerte s der ersten Chroma-Komponente des ersten Videosignals bestimmt wird; und
Generieren, durch den Prozessor, eines dritten Videosignals, welches die umgeformte Chroma-Komponente umfasst.

2. Verfahren nach Anspruch 1, wobei die Chroma-Umformungsfunktion ein Polynom oder ein mehrteiliges Polynom umfasst, wobei der mindestens eine Parameter der Chroma-Umformungsfunktion die Koeffizienten des Polynoms oder des mehrteiligen Polynoms umfasst.

3. Verfahren nach Anspruch 1, wobei die Chroma-Umformungsfunktion eine Lookup-Tabelle (LUT) umfasst, die Schlüssel-Wert-Paare umfasst, wobei die Schlüssel der Schlüssel-Wert-Paare Pixelwerten v der zweiten Chroma-Komponente entsprechen und die Werte der Schlüssel-Wert-Paare Pixelwerten s der ersten Chroma-Komponente entsprechen, wobei der mindestens eine Parameter die Werte der Schlüssel-Wert-Paare der LUT umfasst.

4. Verfahren nach Anspruch 3, wobei für jeden Schlüssel, der einem Pixelwert v der zweiten Chroma-Komponente des zweiten Videosignals entspricht, ein jeweiliger Wert des jeweiligen Schlüssel-Wert-Paars als ein Mittelwert von entsprechenden Pixelwerten s der ersten Chroma-Komponente des ersten Video-Signals bestimmt wird, wobei das Verfahren optional Interpolieren von Werten der Schlüssel-Wert-Paare umfasst, um einen Wert für einen Schlüssel zu erhalten, der nicht als Pixelwert v in der zweiten Chroma-Komponente des zweiten Videosignals enthalten ist.

5. Verfahren nach einem der Ansprüche 1-4, wobei:

das erste Videosignal als ein Eingabevideosignal empfangen wird und das zweite Videosignal durch Anwenden einer Farbformattransformation auf das erste Videosignal erhalten wird; oder
das zweite Videosignal als ein Eingabevideosignal empfangen wird und das erste Videosignal durch Anwenden einer Farbformattransformation auf das zweite Videosignal erhalten wird.

6. Verfahren nach einem der Ansprüche 1-4, umfassend:

Empfangen eines Eingabevideosignals;
Anwenden einer ersten Farbformattransformation auf das Eingabevideosignal, um das erste Videosignal zu erhalten; und
Anwenden einer zweiten Farbformattransformation auf das Eingabevideosignal, um das zweite Videosignal zu erhalten.

7. Verfahren nach einem vorstehenden Anspruch, ferner umfassend Codieren des dritten Videosignals mit einem Codierer, um einen codierten Bitstrom zu generieren, optional umfassend Aufnehmen von Metadaten, welche die Umformungsfunktion oder ihre Umkehrung beschreiben, in den codierten Bitstrom.

8. Verfahren nach einem vorstehenden Anspruch, wobei der mindestens eine Parameter der Umformungsfunktion so bestimmt wird, dass ein statistisches Merkmal der umgeformten Chroma-Komponente mit einem gleichen statistischen Merkmal der ersten Chroma-Komponente gemäß einem Übereinstimmungskriterium übereinstimmt.

9. Verfahren nach Anspruch 8, wobei das Übereinstimmungskriterium dazu dient, Folgendes zu minimieren:

eine mittlere quadratische Abweichung zwischen Pixelwerten der ersten Chroma-Komponente und entsprechenden Pixelwerten der dritten Chroma-Komponente; oder
einen Unterschied einer Standardabweichungsverteilung zwischen Pixelwerten der ersten Chroma-Komponente und entsprechenden Pixelwerten der dritten Pixel-Chroma-Komponente; oder
einen Unterschied einer Menge der Energieverteilung im dritten Signal.

10. Verfahren nach einem vorstehenden Anspruch, wobei das erste Videosignal ferner eine erste Luma-Komponente umfasst und das zweite Videosignal ferner eine zweite Luma-Komponente umfasst und das dritte Videosignal ferner eine von der ersten Luma-Komponente des ersten Videosignals, der zweiten Luma-Komponente des zweiten Videosignals und einer dritten Luma-Komponente umfasst, die durch Anwenden, durch den Prozessor, einer Luma-Umformungsfunktion auf die zweite Luma-Komponente des zweiten Videosignals erhalten wird, wobei optional die eine von der ersten Luma-Komponente, der zweiten Luma-Komponente und der dritten Luma-Komponente ausgewählt wird, die das höchste Luma-Spitzen-Signal-Rausch-Verhältnis aufweist.

11. Verfahren nach einem vorstehenden Anspruch, wobei die erste Chroma-Komponente erneut abgetastet ist.

12. Verfahren nach einem vorstehenden Anspruch, wobei:

das erste Farbformat mindestens eine von einer ersten Farbabtastung und einer ersten EOTF umfasst, wobei die erste EOTF optional Gamma ist; und/oder
das zweite Farbformat mindestens eine von einer zweiten Farbabtastung und einer zweiten EOTF umfasst, wobei die zweite EOTF optional PQ oder HLG ist.

13. Verfahren (523, 524) zum Decodieren eines umgeformten Videosignals mit hohem Dynamikbereich, umfassend:

Umformen eines Videosignals mit hohem Dynamikbereich nach einem der vorstehenden Ansprüche;
Empfangen des umgeformten Videosignals mit hohem Dynamikbereich, das eine umgeformte Chroma-Komponente umfasst;
Empfangen von Metadaten, die eine Chroma-Umformungsfunktion oder ihre Umkehrung beschreiben;
Bestimmen einer Rückwärts-Chroma-Umformungsfunktion anhand der empfangenen Metadaten;
Anwenden (524) der Rückwärts-Chroma-Umformungsfunktion auf die umgeformte Chroma-Komponente, um eine Ausgabe-Chroma-Komponente (526) zu erhalten; und
Generieren eines Ausgabesignal, das die Ausgabe-Chroma-Komponente umfasst.

**14.** Einrichtung (10), die dazu konfiguriert ist, das Verfahren nach einem der Ansprüche 1-13 umzusetzen.

**15.** Computerlesbares Speichermedium, das Anweisungen umfasst, die bei Ausführung durch einen Prozessor den Prozessor dazu veranlassen, ein Verfahren nach einem der Ansprüche 1-13 durchzuführen.

**Revendications**

**1.** Procédé (300, 400, 500) pour remodeler un signal vidéo à grande gamme dynamique, le procédé comprenant :

l'obtention (312, 414, 514) d'un premier signal vidéo à grande gamme dynamique représentant le signal vidéo à grande gamme dynamique dans un premier format de couleur comprenant un premier espace couleur qui est un parmi YCbCr, YCoCg et RGB, le premier signal vidéo comprenant une première composante de chrominance ;
l'obtention (318, 416, 516) d'un deuxième signal vidéo à grande gamme dynamique représentant le signal vidéo à grande gamme dynamique dans un second format de couleur comprenant un second espace couleur qui est un parmi IPT et ICTCP, le second signal vidéo comprenant une deuxième composante de chrominance ;
l'application (320, 418, 520), par un processeur, d'une fonction de remodelage de chrominance à la deuxième composante de chrominance du deuxième signal vidéo pour générer une composante de chrominance remodelée, dans lequel la fonction de remodelage de chrominance met en correspondance des valeurs de pixel de la deuxième composante de chrominance dans le second espace couleur avec des valeurs de pixel de la première composante de chrominance dans le premier espace couleur, dans lequel au moins un paramètre de la fonction de remodelage de chrominance est déterminé en adaptant la fonction de remodelage de chrominance à des valeurs de pixel v de la deuxième composante de chrominance du deuxième signal vidéo et à des valeurs de pixel correspondantes s de la première composante de chrominance du premier signal vidéo ; et
la génération, par le processeur, d'un troisième signal vidéo comprenant la composante de chrominance remodelée.

**2.** Procédé selon la revendication 1, dans lequel la fonction de remodelage de chrominance comprend un polynôme ou un polynôme à plusieurs éléments, dans lequel l'au moins un paramètre de la fonction de remodelage de chrominance comprend les coefficients du polynôme ou du polynôme à plusieurs éléments.

**3.** Procédé selon la revendication 1, dans lequel la fonction de remodelage de chrominance comprend une table de consultation (LUT) comprenant des paires clé-valeur, les clés des paires clé-valeur correspondant à des valeurs de pixel v de la deuxième composante de chrominance et les valeurs des paires clé-valeur correspondant à des valeurs de pixel s de la première composante de chrominance, l'au moins un paramètre comprenant les valeurs des paires clé-valeur de la LUT.

**4.** Procédé selon la revendication 3, dans lequel, pour chaque clé correspondant à une valeur de pixel v de la deuxième composante de chrominance du deuxième signal vidéo, une valeur respective de la paire clé-valeur respective est déterminée comme une moyenne de valeurs de pixel correspondantes s de la première composante de chrominance du premier signal vidéo, dans lequel le procédé comprend éventuellement l'interpolation de valeurs de paires clé-valeur pour obtenir une valeur pour une clé qui n'est pas incluse comme valeur de pixel v dans la deuxième composante de chrominance du deuxième signal vidéo.

**5.** Procédé selon l'une quelconque des revendications 1-4, dans lequel :

le premier signal vidéo est reçu comme un signal vidéo d'entrée et le deuxième signal vidéo est obtenu en appliquant une transformation de format de couleur au premier signal vidéo ; ou
le deuxième signal vidéo est reçu comme un signal vidéo d'entrée et le premier signal vidéo est obtenu en appliquant une transformation de format de couleur au deuxième signal vidéo.

**6.** Procédé selon l'une quelconque des revendications 1-4, comprenant :

la réception d'un signal vidéo d'entrée ;

l'application d'une première transformation de format de couleur au signal vidéo d'entrée pour obtenir le premier signal vidéo ; et

l'application d'une seconde transformation de format de couleur au signal vidéo d'entrée pour obtenir le deuxième signal vidéo.

**7.** Procédé selon une quelconque revendication précédente, comprenant en outre le codage du troisième signal vidéo avec un codeur pour générer un flux binaire codé, éventuellement comprenant l'inclusion dans le flux binaire codé de métadonnées décrivant la fonction de remodelage ou son inverse.

**8.** Procédé selon une quelconque revendication précédente, dans lequel l'au moins un paramètre de la fonction de remodelage est déterminé de manière qu'une caractéristique statistique de la composante de chrominance remodelée corresponde à une même caractéristique statistique de la première composante de chrominance en fonction d'un critère de correspondance.

**9.** Procédé selon la revendication 8, dans lequel le critère de correspondance est pour minimiser :

une erreur quadratique moyenne entre des valeurs de pixel de la première composante de chrominance et de valeurs de pixel correspondantes de la troisième composante de chrominance ; ou
une différence d'une distribution d'écart-type entre des valeurs de pixel de la première composante de chrominance et de valeurs de pixel correspondantes de la troisième composante de chrominance de pixel ; ou
une différence d'une quantité de distribution d'énergie dans le troisième signal.

**10.** Procédé selon une quelconque revendication précédente, dans lequel le premier signal vidéo comprend en outre une première composante de luminance et le deuxième signal vidéo comprend en outre une deuxième composante de luminance, et le troisième signal vidéo comprend en outre une parmi la première composante de luminance du premier signal vidéo, la deuxième composante de luminance du deuxième signal vidéo et une troisième composante de luminance obtenue en appliquant, par le processeur, une fonction de remodelage de luminance à la deuxième composante de luminance du deuxième signal vidéo, dans lequel éventuellement l'une parmi la première composante de luminance, la deuxième composante de luminance et la troisième composante de luminance est sélectionnée en ce qu'elle a le rapport signal/bruit de crête de luminance le plus élevé.

**11.** Procédé selon une quelconque revendication précédente, dans lequel la première composante de chrominance est ré-échantillonnée.

**12.** Procédé selon une quelconque revendication précédente, dans lequel :

le premier format de couleur comprend au moins un parmi un premier échantillonnage de couleur et une première EOTF, dans lequel la première EOTF est éventuellement gamma ; et/ou
le second format de couleur comprend au moins un parmi un second échantillonnage de couleur et une seconde EOTF, dans lequel la seconde EOTF est éventuellement PQ ou HLG.

**13.** Procédé (523, 524) de décodage d'un signal vidéo à grande gamme dynamique remodelé, comprenant : le remodelage d'un signal vidéo à grande gamme dynamique selon l'une quelconque des revendications précédentes ;
la réception du signal vidéo à grande gamme dynamique remodelé, comprenant une composante de chrominance remodelée ;
la réception de métadonnées décrivant une fonction de remodelage de chrominance ou son inverse ;
la détermination d'une fonction de remodelage de chrominance en arrière à partir des métadonnées reçues ;
l'application (524) de la fonction de remodelage de chrominance en arrière à la composante de chrominance remodelée pour obtenir une composante de luminance de sortie (526) ; et
la génération d'un signal de sortie comprenant la composante de chrominance de sortie.

**14.** Appareil (10) configuré pour mettre en œuvre le procédé selon l'une quelconque des revendications 1-13.

**15.** Support de stockage lisible par ordinateur comprenant des instructions qui, quand elles sont exécutées par un processeur, amènent le processeur à réaliser un procédé selon l'une quelconque des revendications 1-13.

10

Processor — 15

Memory — 20
Operating System (OS) — 25
Executable Program — 30

Local Interface — 35

Input/Output (I/O) — 40

Fig. 1

Fig. 2

EP 3 226 563 B1

300

| 310 → | First Color Format (312) | → | Chroma resampling (314) | → | First Color Format Transform (316)<br>Color Space<br>Color Sampling<br>EOTF | → | Second Color Format (318) | → | Chroma reshaping (320) | → 322 |

Fig. 3

400

Fig. 4

500

516

510 → 12+ EDR Signal [512]

Second Color Format Transform [516]

Color Space

Color Sampling

EOTF

First Color Format Transform [514]

Solve forward/ backward reshaping function [518]

Chroma forward reshaping [520]

Compression [522]

Decompression [523]

Chroma backward reshaping [524]

→ 526

Fig. 5

600

| 610 | obtaining a first video signal in a first color format comprising a first chroma component |
|---|---|

| 612 | obtaining a second video signal in a second color format comprising a second chroma component |
|---|---|

| 614 | applying, by a processor, a chroma reshaping function to the second chroma component of the second video signal to generate a reshaped chroma component, wherein at least one parameter of the reshaping function is determined by fitting the reshaping function to pixel values $v_{ji}$ of the second chroma component of the second video signal and corresponding pixel values $s_{ji}$ of the first chroma component of the first video signal |
|---|---|

| 616 | generating, by the processor, a third video signal comprising the reshaped chroma component |
|---|---|

## Fig. 6

700

| 710 | receiving a first signal in a first color format, the first signal comprising a first luma component and a first chroma component |

| 712 | transforming, by a processor, the first signal to a second signal in a second color format, the second signal comprising a second luma component and a second chroma component |

| 714 | applying, by the processor, a polynomial chroma reshaping function to the second chroma component to generate a third chroma polynomial component |

| 716 | applying, by the processor, a look up table (LUT) chroma reshaping function to generate a third chroma LUT component |

| 718 | selecting, by the processor, one of the third chroma polynomial component and the third chroma LUT component having a higher luma peak signal to noise ratio |

| 720 | generating, by the processor, a third signal comprising the second luma component and the selected third chroma component |

| 722 | coding the third signal with an encoder to generate a coded bitstream |

Fig. 7

800

810 — receiving a first signal in a first color format, the first signal comprising a first luma component and a first chroma component

812 — transforming, by a processor, the first signal to a second signal in a second color format, the second signal comprising a second luma component and a second chroma component

814 — applying, by the processor, a chroma reshaping function to the first chroma component to generate a third chroma component, wherein at least one of parameters of the reshaping function are selected so that a statistical characteristic of the third chroma component matches the statistical characteristic of the second chroma component according to a matching criterion

816 — applying, by the processor, a luma reshaping function to the first luma component to generate a third luma component, utilizing the statistical characteristic matching criterion

818 — generating, by the processor, a third signal comprising the third chroma component and at least one of the first luma component, the second luma component and the third luma component

820 — coding the third signal with an encoder to generate a coded bitstream

Fig. 8

900

910 — receiving at least one first signal in at least one first color format, the at least one first signal comprising at least one first luma component and at least one first chroma component

912 — transforming, by a processor, the at least one first signal to at least one second signal in at least one second color format, the at least one second signal comprising at least one second luma component and at least one second chroma component

914 — applying, by the processor, at least one chroma reshaping function to the at least one second chroma component to generate at least one third chroma component, wherein the parameters of the at least one reshaping function are selected so that at least one statistical characteristic of the at least one third chroma component matches at least one statistical characteristic of the at least one first chroma component according to at least one matching criterion

916 — applying, by the processor, at least one luma reshaping function to at least one second luma component to generate at least one third luma component, utilizing the statistical characteristic matching criterion

918 — generating, by the processor, at least one third signal comprising the at least one third chroma component and at least one of the at least one first luma component, the at least one second luma component and the at least third luma component selected based on a higher respective luma peak signal to noise ratio

920 — coding the at least one third signal with an encoder to generate a coded bitstream

Fig. 9

1000

1010 — receiving at least one first signal in at least one first color format, the at least one first signal comprising at least one first luma component and at least one first chroma component

1012 — transforming, by a processor, the at least one first signal to at least one second signal in at least one second color format, the at least one second signal comprising at least one second luma component and at least one second chroma component

1014 — applying, by the processor, at least one chroma reshaping function to the at least one first chroma component to generate at least one third chroma component, wherein the parameters of the at least one reshaping function are selected so that at least one statistical characteristic of the at least one third chroma component matches at least one statistical characteristic of the at least one second chroma component according to at least one matching criterion

1016 — applying, by the processor, at least one luma reshaping function to at least one first luma component to generate at least one third luma component, utilizing the statistical characteristic matching criterion

1018 — generating, by the processor, at least one third signal comprising the at least one third chroma component and at least one of the at least one first luma component, the at least one second luma component and the at least third luma component selected based on a higher respective luma peak signal to noise ratio

1020 — coding the at least one third signal with an encoder to generate a coded bitstream

Fig. 10

1100

| 1110 | receiving a first signal in a first color format, the first signal comprising a first luma component and a first chroma component |
|---|---|

| 1112 | transforming, by a processor, the first signal to a second signal in a second color format, the second signal comprising a second luma component and a second chroma component |
|---|---|

| 1114 | applying, by the processor, at least two chroma reshaping functions to the second chroma component to generate a set of third chroma components |
|---|---|

| 1116 | selecting, by the processor, one of the set of third chroma components having a higher respective luma peak signal to noise ratio |
|---|---|

| 1118 | generating, by the processor, a third signal comprising the selected chroma component and the respective luma component |
|---|---|

| 1120 | coding the third signal with an encoder to generate a coded bitstream |
|---|---|

# Fig. 11

1200

1210 — receiving a first signal in a first color format, the first signal comprising a first luma component and a first chroma component

1212 — transforming, by a processor, the first signal to a second signal in a second color format, the second signal comprising a second luma component and a second chroma component

1214 — applying, by the processor, at least two chroma reshaping functions to the first chroma component to generate a set of third chroma components

1216 — selecting, by the processor, one of the set of third chroma components having a higher respective luma peak signal to noise ratio

1218 — generating, by the processor, a third signal comprising the selected chroma component and the respective luma component

1220 — coding the third signal with an encoder to generate a coded bitstream

Fig. 12

1300

1314

Color Format
Transformer

1312

| Color Space |

1310 → Analyzer

| Color Sampling |

| EOTF |

1316

Chroma
Reshaper

1318

Generator

1320

Coder

1322 →

Fig. 13

1400

```
1412                          1416
1410    ┌──────────┐          ┌──────────┐    1420
───────▶│ Metadata │─────────▶│  Chroma  │───────▶
        │ Evaluator│          │ Reshaper │
        └──────────┘          └──────────┘
```

# Fig. 14

1500

1510 — receiving, by the processor, a first signal in a first color format

1512 — analyzing, by the processor, a first set of statistical parameters of said first signal

1514 — determining, by the processor, based on the first set of statistical parameters whether the first signal is a reference signal, the reference signal comprising a reference luma component and a reference chroma component

1516 — transforming, by the processor, the first signal into a non-reference signal in a non-reference color format if the first signal is determined a reference signal, the non-reference signal comprising a non-reference luma component and a non-reference chroma component

1518 — transforming, by the processor, the first signal into a reference signal in a reference color format if the first signal is determined to be a non-reference signal

1520 — applying, by the processor, a chroma reshaping function to the non-reference chroma component to generate a reshaped chroma component, wherein at least one of parameters of the chroma reshaping function are selected so that a statistical characteristic of the reshaped chroma component matches the statistical characteristic of the reference chroma component according to a matching criterion

1522 — applying, by the processor, a luma reshaping function to the non-reference luma component to generate a reshaped luma component, utilizing the matching criterion of the statistical characteristic

1524 — generating, by the processor, a reshaped signal comprising the reshaped chroma component and at least one of the reference luma component, the non-reference luma component and the reshaped luma component

1526 — coding the reshaped signal with an encoder to generate an encoded bit stream

Fig. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014204865 A1
- US 2012314944 A1
- US 2009196338 A1
- WO 2014130343 A, R. Atkins
- US 9077994 B

### Non-patent literature cited in the description

- **MINOO (ARRIS) K et al.** Description of the reshaper parameters derivation process in ETM reference software. *23. JCT-VC MEETING*
- Development and testing of a color space (ipt) with improved hue uniformity. **F. EBNER ; M.D. FAIRCHILD.** Proc. 6th Color Imaging Conference: Color Science, Systems, and Applications. IS&T, November 1998, 8-13
- High dynamic range television for production and international programme exchange. *International Telecommunications Union Radio communication Sector (ITU-R) Report BT. 2390-0,* 2016